# FASCICULE DE BREVET EUROPEEN

(11) **EP 0 826 554 B1**
(45) Date de publication et mention de la délivrance du brevet: **13.06.2001**
(21) Numéro de dépôt: 97440073.1
(22) Date de dépôt: 27.08.1997
(51) Int. Cl.: B60Q 1/14

(54) **Système de transformation de mouvement**
Bewegungsumwandlungssystem
Motion conversion system

(30) Priorité: 03.09.1996 FR 9610867
(43) Date de publication de la demande: 04.03.1998
(73) Titulaire: Eaton Corporation, Carol Stream, Illinois 60188 (US)
(72) Inventeur: Garin, Gilles, 67100 Strasbourg (FR); Rudolph, Gerd, 55459 Aspisheim (DE); Ullius, Henri, 67270 Schwindratzheim (FR)
(74) Mandataire: Littolff, Denis

(56) Documents cités:
- EP-A- 0 577 499
- EP-A- 0 577 500
- US-A- 5 272 290

## Description

La présente invention concerne un système de transformation de mouvement appliqué à au moins deux ensembles rotatifs d'axes principaux non concourants, et permettant la transmission d'un déplacement angulaire d'au moins un élément du premier ensemble rotatif à au moins un élément du second ensemble rotatif.

Dans le système de l'invention, l'un des ensembles, par exemple celui d'où provient le déplacement à transmettre, comporte un degré de liberté supplémentaire: il est libre en rotation autour d'un second axe perpendiculaire au premier, au moins selon un débattement angulaire limité.

L'application préférentielle de l'invention se situe dans le domaine des leviers de commande sous volant d'automobiles, et concerne plus particulièrement un tel levier muni de deux bagues de commande rotatives. Le levier peut par exemple commander les feux clignotants, alors que les deux bagues rotatives contrôlent les feux de position et de croisement pour l'une, les feux de brouillard avant et arrière pour l'autre.

Dans une telle configuration, les contacts à gérer son multiples, ainsi que les positions des éléments mécaniques qui font partie du levier. Certaines fonctions peuvent avoir à intervenir simultanément, alors que d'autres sont totalement distinctes. La combinaison des positions mécaniques et des commutations électriques doit cependant être basiquement telle que les mouvements mécaniques de chacun des éléments constitutifs du levier ne doivent dans la plupart des cas pas interférer avec les effets électriques générés par les autres éléments.

Compte tenu de la complexité mécanique des liaisons, cette contrainte peut s'avérer problématique pour la mise en place des connections électriques. En effet, chaque élément comporte son propre système de lecture électrique de la position mécanique qu'il occupe, formant un faisceau d'informations transmis à des connecteurs, puis aux dispositifs de commande des récepteurs précités, c'est-à-dire les ampoules des feux mentionnés.

Jusqu'ici, les déplacements angulaires des leviers étaient par exemple gérés par des patins coulissants sur des pistes électriques. Le mouvement linéaire d'un patin est alors déclenché par un arbre doté d'un doigt d'extrémité coopérant avec ledit patin et répercutant selon un déplacement linéaire le mouvement imprimé au levier de commande.

Le système de commutation électrique des bagues radiales desdits leviers repose quant à lui sur la coopération entre des patins rotatifs et des pistes conductrices en cuivre, situés au niveau desdites bagues, et dont les signaux indiquant le positionnement relatif de la bague par rapport au levier sont transmis par des fils à un connecteur opérant la liaison entre le boîtier dudit levier et le tableau de bord du véhicule.

L'existence de liaisons par fils implique la réalisation de soudures qui diminuent d'une manière générale la fiabilité des dispositifs. En outre, les opérations de montage / démontage entraînent des risques de coupure des conducteurs, qui sont au surplus soumis à des contraintes mécaniques pendant lesdites opérations, pouvant aussi conduire à des ruptures au niveau desdites soudures.

Lorsque le nombre de conducteurs est réduit, les risques évoqués ne sont pas très importants. Cependant, la tendance actuelle est de rajouter de plus en plus de fonctions sur les manettes sous volant, conduisant à un accroissement de la complexité des leviers de commande. Ainsi, l'apparition d'une seconde bague radiale double en principe le nombre des soudures, des fils, etc...

Corollairement, le nombre de pièces augmente, ainsi que la complexité du montage et, en fin de chaîne, les risques de dysfonctionnement dus par exemple à une mauvaise connexion, à une rupture d'un conducteur ou à tout autre problème de ce type pouvant affecter les soudures, les conducteurs ou même les pièces mécaniques impliquées dans ces montages.

De fait, l'augmentation du nombre des fonctions assurées par les manettes pose un problème de commutation : ces manettes sont des commutateurs sophistiqués fonctionnant selon plusieurs types de liaisons mécaniques, imposant des contraintes différentes aux connections électriques correspondantes.

Un objectif de l'invention est par conséquent de proposer un système de commutation intégré à de telles manettes qui soit entièrement repensé, notamment en vue d'améliorer sensiblement la fiabilité globale de la commutation.

Un autre objectif est de supprimer un nombre maximal de pièces pour faciliter le montage et réduire corollairement simultanément les coûts et les durées de production.

Un objectif encore est de permettre l'application du même système optimisé à des manettes de commutation simples, c'est-à-dire assurant un petit nombre de fonctions différentes, ou complexes et gérant de multiples commutations. La nouvelle conception est à cet effet largement modulaire.

Enfin, l'invention, bien qu'autorisant des commutations selon diverses liaisons et orientations mécaniques, est dépourvue de fils, donc de soudures, et la fiabilité globale de la nouvelle conception s'en trouve largement améliorée.

Comme on l'a mentionné précédemment, les leviers de commutation ou manettes sous volant équipant les véhicules automobiles constituent une application préférentielle de l'invention, qui peut cependant s'appliquer à d'autres domaines, puisqu'à la base, la commutation sans fils est assurée par un système de transformation de mouvement gérant des commutations de contacts électriques.

Ces commutations peuvent servir à transmettre des informations sous forme de signaux électriques dans de multiples domaines.

Plus précisément, le système de transformation de mouvement de l'invention est appliqué à au moins deux ensembles rotatifs d'axes principaux non concourants, permettant la transmission d'un déplacement angulaire d'au moins un élément d'un premier ensemble rotatif à au moins un élément d'au moins un second ensemble rotatif, ledit premier ensemble rotatif étant au surplus libre en rotation autour d'un second axe, et il est caractérisé en ce que chaque élément dudit premier ensemble rotatif est muni d'un organe de liaison mécanique destiné à coopérer avec un organe de liaison mécanique d'un élément d'un second ensemble rotatif, lesdits organes étant configurés de manière à simultanément transmettre et transformer le mouvement rotatif dudit élément du premier ensemble en un mouvement rotatif d'un élément autour de l'axe dudit second ensemble, sans inhiber la rotation d'aucun des éléments du premier ensemble autour de leur second axe de rotation, et indépendamment du fonctionnement des autres éléments desdits ensembles.

Les éléments de chaque ensemble rotatif tournent autour du même axe, et ont une zone située à proximité d'un élément d'un autre ensemble, dans laquelle s'effectue la liaison mécanique.

Selon une possibilité, l'organe de liaison mécanique équipant chaque élément du premier ensemble rotatif consiste en une excroissance dont le plan médian contient le premier axe de rotation dudit élément et contient ou est parallèle à l'axe de rotation du second ensemble rotatif.

Plus précisément, ladite excroissance est un doigt en forme de L.

De préférence, ledit L formant l'excroissance comporte un jambage d'allure perpendiculaire au premier axe de rotation de l'élément auquel il est fixé, et une base parallèle audit axe.

Cette configuration particulière est destinée à coopérer avec une configuration correspondante située sur le second ensemble rotatif.

D'une manière générale, l'organe de liaison mécanique équipant chaque élément du second ensemble rotatif est doté de deux excroissances parallèles à l'axe de rotation dudit ensemble, entre lesquelles se positionne au moins une partie de l'organe de liaison mécanique d'un des éléments du premier rotatif de sorte qu'elle puisse exercer une action latérale contre l'une ou l'autre desdites excroissances parallèles.

Ledit organe de liaison mécanique équipant chaque élément du second ensemble peut par exemple consister en une fourche à deux branches en forme de U ouvert vers les éléments du premier ensemble rotatif, dont l'ouverture entre les branches est supérieure à l'épaisseur dudit doigt en forme de L, au moins dans sa portion formant base.

La configuration proposée pour les deux ensembles rotatifs permet globalement de transformer un mouvement rotatif suivant un axe de rotation déterminé en un second mouvement rotatif autour d'un axe distinct du premier.

Dans la plupart des cas, notamment dans l'application à des leviers de commutation, les ensembles rotatifs sont au nombre de deux, chacun pouvant comporter au moins un élément.

Dans cette application particulière, le premier ensemble rotatif consiste en un levier de commande à au moins deux bagues rotatives solidarisées des arbres de commandes correspondants concentriques, ledit levier étant au surplus libre en rotation, selon un débattement angulaire limité, autour d'au moins un axe de pivotement. Il en existe en réalité souvent deux, perpendiculaires entre eux, et permettant des mouvements indépendants.

L'existence de ces axes de rotation est importante à souligner, car ils influent sur la conception mécanique du système de liaison entre les deux ensembles rotatifs, puisque la rotation autour de ces axes ne doit pas être inhibée par le couplage des rotations autour des deux autres axes.

Le second ensemble rotatif consiste en au moins deux chariots superposés pivotant autour d'un axe commun et actionnés par les arbres de commande des bagues du levier.

Chaque chariot est doté de contacts destinés à commuter sur des contacts placés dans un boîtier dans lequel sont reliés les deux ensembles rotatifs, respectivement le levier de commande et les plateaux de commutation.

Il n'y a donc plus aucun couplage électrique au niveau des liaisons mécaniques complexes du levier de commutation dans ce boîtier. L'avantage considérable procuré par l'invention par rapport aux systèmes qui existent à ce jour est cette indépendance entre la plupart des mouvements mécaniques et les connections électriques, qui améliore dans une large mesure la fiabilité de l'ensemble.

De préférence, les contacts localisés sur les deux chariots superposés sont situés dans un plan unique et coopèrent par glissement avec des pistes de commutation surmoulées dans une embase plane dudit boîtier.

De la sorte, l'ensemble des commutations déclenchées par des mouvements des bagues a lieu dans un unique plan, car les deux chariots superposés comportent chacun une zone au contact de ladite embase.

L'invention va à présent être décrite en détail en référence aux figures annexées, pour lesquelles :
- la figure 1a est une vue en perspective du boîtier et des éléments principaux de l'invention qui y sont logés ;
- la figure 1b est une vue agrandie du boîtier proprement dit ;
- les figures 2a et 2b sont des vues en perspective des arbres pivotant dans le levier de commande ;
- les figures 3a et 3b sont des vues en perspective des deux chariots formant le second ensemble rotatif ; et
- les figures 4a et 4b sont des vues de dessus de l'ensemble des éléments logés dans le boîtier dans deux positions de fonctionnement distinctes.

Ces figures donnent une configuration préférentielle de l'invention, et n'ont pas pour but de limiter la protection aux seules formes divulguées.

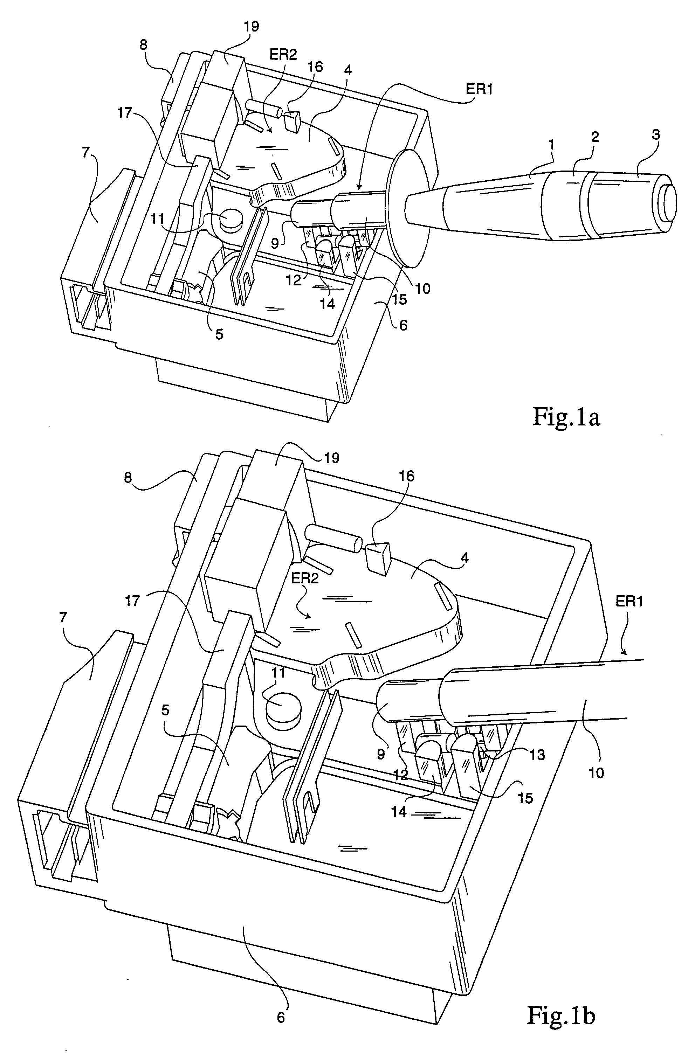

Les figures 1a et 1b montrent les composants du système de l'invention en interaction fonctionnelle les uns avec les autres. On se situe dans le cadre de l'application préférentielle à un véhicule automobile.

Les deux ensembles rotatifs ER1 et ER2 tournent autour de deux axes distincts situés dans deux plans sécants. L'ensemble rotatif ER1 est en réalité solidaire de la manette sous volant 1 constituant le levier de commutation et est doté des bagues d'extrémité 2, 3 pivotant autour de l'axe de symétrie dudit levier 1.

L'ensemble rotatif ER2 comporte les chariots rotatifs 4, 5 pivotant dans un plan parallèle au plan du fond du boîtier 6, lequel contient la plupart des éléments mécaniques. Ledit boîtier est destiné à être fixé derrière le volant du véhicule, notamment au moyen des moyens de connexion mécanique 7, 8, apparaissant sur l'une des faces du boîtier G.

Les deux axes principaux de rotation sont matérialisés d'une part par les arbres concentriques 9, 10 du premier ensemble rotatif ER1, et d'autre part par le pivot 11 du second ensemble ER2. Chacun desdits arbres concentriques 9, 10 comporte à l'une de ses extrémités un doigt de manoeuvre sensiblement en forme de L 12, 13 coopérant avec une fourche bifide 14, 15 d'un des chariots rotatifs 4, 5, comme on le verra plus en détail ci-après.

Selon une possibilité, les fonctions assurées par la manette sous volant sont les suivantes :
- la bague 2 réalise la commutation des feux antibrouillard ;
- la bague 3 réalise la commutation des feux de position et des feux de croisement ; et
- le levier complet réalise la commutation des feux clignotants, d'une manière qui n'est pas décrite en détail, car elle n'est pas l'objet de l'invention.

Les rotations des bagues 2, 3 (par exemple selon des angles successifs de 30°) entraînent les rotations de leurs arbres de commande 9, 10 respectifs, puis celles des chariots 4, 5 correspondants par l'intermédiaire des doigts en L 12, 13 coopérant avec les fourches bifides 14, 15 des chariots 4, 5.

Les chariots 4, 5 sur lesquels sont fixés les patins de commutation pivotent à plat sur l'embase du boîtier 6 et assurent la commutation électrique. Toutes les commutations résultant de cette cinématique particulière dédoublée se font mécaniquement, à l'intérieur du boîtier. Il n'y a donc aucun fil de liaison entre les bagues 2, 3 et l'embase.

Selon une option, lorsque la bague 3 est actionnée pour revenir d'une position en feux de croisement à une position en feux de position ou éteinte, et lorsque la commutation est simultanément verrouillée en feux de route, il faut qu'il y ait un déverrouillage automatique afin que l'on revienne systématiquement en feux de croisement à partir d'une position inférieure, au cours d'une utilisation ultérieure.

On a donc prévu une came de déverrouillage 16 agissant sur un levier d'inversion feux de route / feux de croisement 17. A l'inverse, il existe également une came de verrouillage 19 en position feux de route.

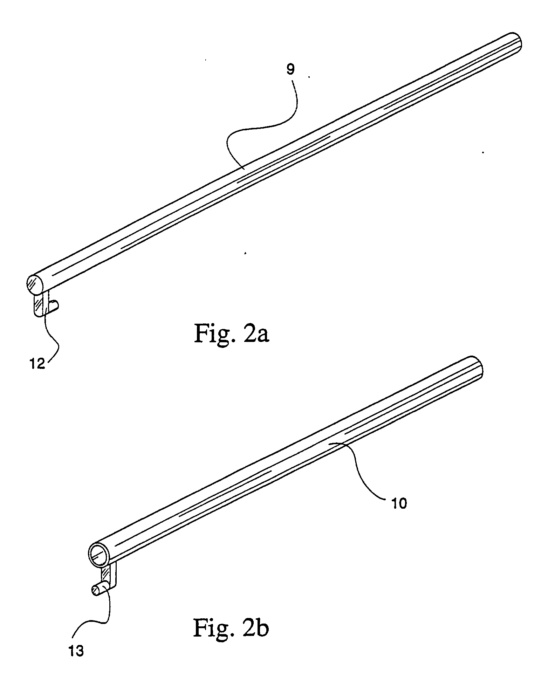

Les figures 2a et 2b représentent les deux éléments principaux de l'ensemble rotatif ER1, à savoir les arbres de commande concentriques 9 (figure 2a) et 10 (figure 2b). Les deux doigts en L 12, 13 sont orientés d'une manière inverse l'un par rapport à l'autre.

Lesdits arbres de commande 9, 10 sont libres en rotation l'un par rapport à l'autre, et reliés aux bagues 2, 3 par un système mécanique qui ne fait pas partie en tant que tel de l'invention, et n'est donc pas décrit en détail.

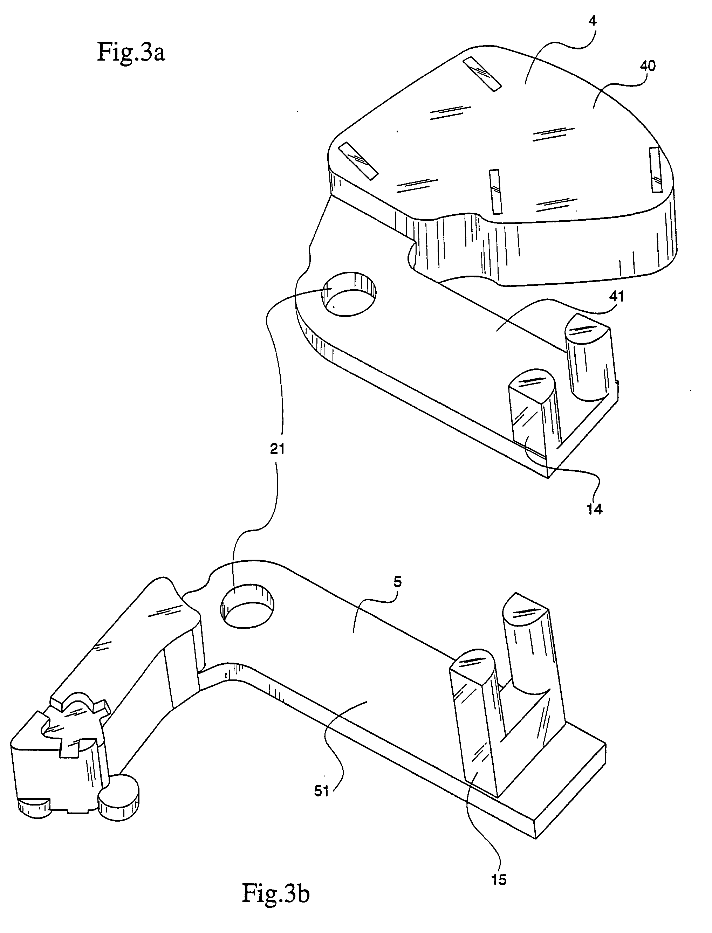

Les figures 3a et 3b représentent les deux chariots 4 et 5. Le chariot inférieur 5 est doté d'une semelle plane sur laquelle sont disposés les contacts à commuter par glissement sur les pistes surmoulées dans l'embase du boîtier 6 (non représentées).

Le chariot rotatif supérieur 4 comporte une semelle à deux niveaux plans : un premier niveau correspondant au corps principal 40 dudit chariot est coplanaire à la semelle du chariot 5 en cours de fonctionnement. Cette partie comporte les contacts destinés à commuter sur les pistes de l'embase.

Une seconde partie forme la semelle d'une patte 41 qui est au contact avec la surface supérieure d'une patte 51 du chariot 5. Ces deux surfaces glissent l'une sur l'autre lorsqu'il y a rotation d'au moins un des deux chariots autour du pivot 11.

Les pattes 41, 51 comportent les fourches bifides 14, 15 coopérant avec les doigts en L 12, 13 des arbres de commandes 9, 10 constituant le premier ensemble rotatif ER1. Les orifices 21 pratiqués dans ces chariots 4, 5 sont prévus pour loger le plot de pivotement 11 desdits chariots 4, 5. Ces chariots peuvent réaliser d'autres fonctions secondaires dans le cadre de l'invention, ainsi qu'on l'a mentionné précédemment.

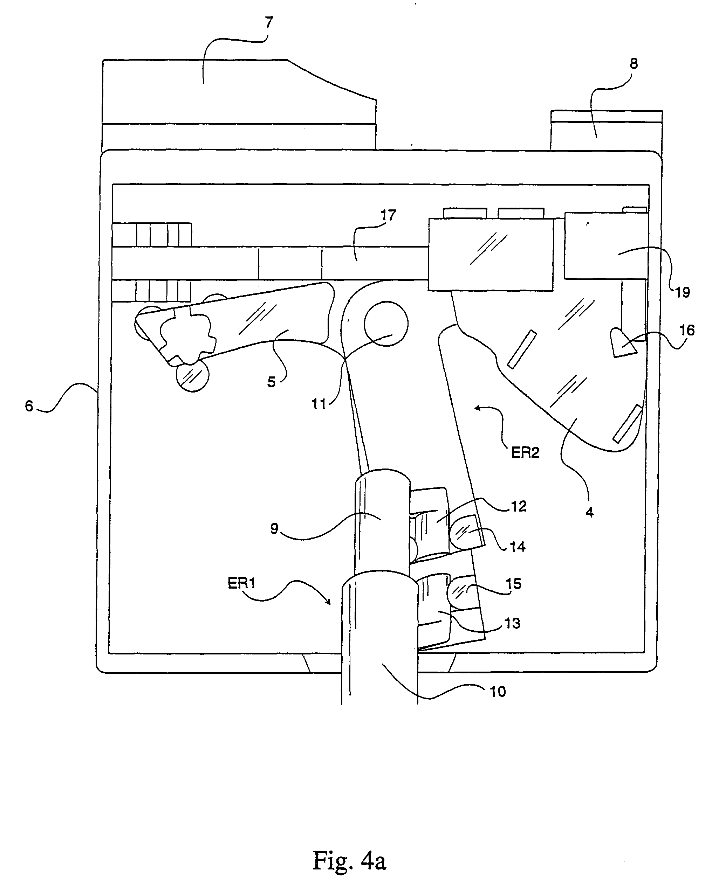

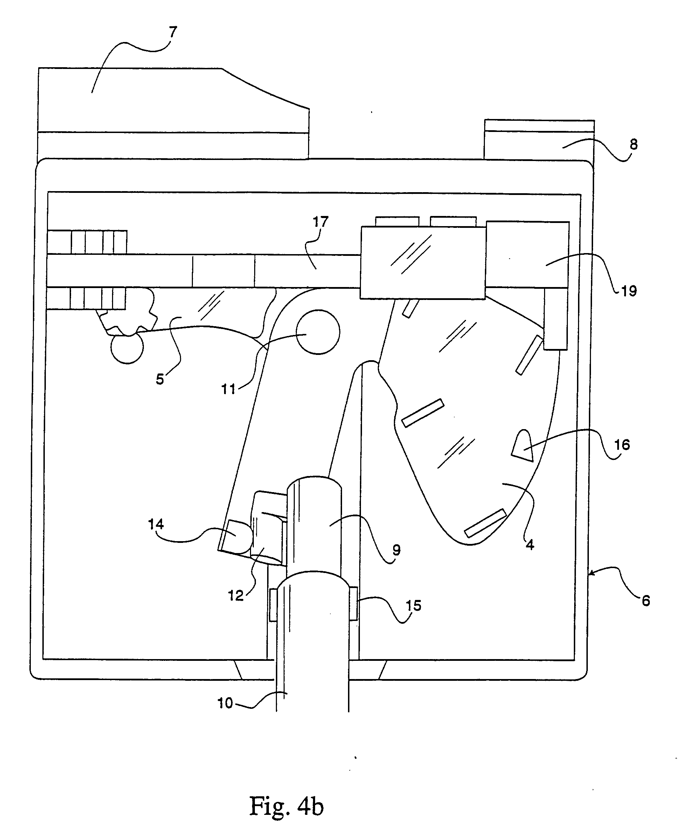

Les figures 4a et 4b illustrent l'indépendance des éléments constituant les ensembles de rotation ER1 et ER2, en donnant deux positions distinctes et indépendantes pour chaque chariot 4, 5 et par conséquent pour chaque arbre 9, 10.

Ainsi, en figure 4a, les deux chariots 4, 5 sont poussés vers la droite de la figure, et les doigts 12, 13 apparaissent par conséquent sur le même côté droit. Il s'agit basiquement de la position initiale des deux bagues, c'est-à-dire de la position d'extinction des feux, de brouillard comme de position ou de croisement. Dans cette position, on peut d'ailleurs remarquer que la came de déverrouillage des feux de route 16 entraîne le levier d'inversion feux de croisement / feux de route 17.

En figure 4b, l'arbre de commande 10 est en position médiane, le doigt en L 13 n'apparaît plus, la commande est celle des antibrouillards avant. Si l'on effectuait encore une rotation de la bague 2 de 30° dans le sens des aiguilles d'une montre, les antibrouillards avant et arrière seraient allumés.

C'est cette dernière position qui est illustrée pour l'arbre de commande 9, qui se trouve donc en position d'allumage des feux de croisement. Dans tous les cas, les commutation ont lieu par glissement des semelles des chariots 4, 5 sur l'embase du boîtier 6, provoqué par la rotation des doigts 12, 13 induite par les bagues 2, 3 de la manette sous volant 1.

Dans la description de l'exemple qui précède, on a utilisé un dispositif à deux éléments mobiles dans chaque ensemble rotatif ; ceci est bien entendu modifiable, et il est par exemple possible d'imaginer un système à 3 arbres concentriques actionnant trois chariots rotatifs.

De même, les formes utilisées par exemple pour les doigts en L ne sont pas limitatives, et peuvent être prévues en fonction des formes propres des chariots.

## Revendications

1. Système de transformation de mouvement appliqué à au moins deux ensembles rotatifs (ER1, ER2) d'axes principaux non concourants, permettant la transmission d'un déplacement angulaire d'au moins un arbre de commande (9, 10) d'un premier ensemble rotatif (ER1) à au moins un élément (4, 5) d'au moins un second ensemble rotatif (ER2), ledit premier ensemble rotatif ER1 étant au surplus libre en rotation autour d'un second axe, **caractérisé en ce que** chaque arbre de commande (9, 10) dudit premier ensemble rotatif (ER1) est muni d'un organe de liaison mécanique (12, 13) destiné à coopérer avec un organe de liaison mécanique (14, 15) d'un élément (4,5) d'un second ensemble rotatif (ER2), lesdits organes (12, 13, 14, 15) étant configurés de manière à simultanément transmettre et transformer le mouvement rotatif dudit arbre de commande (9, 10) du premier ensemble (ER1) en un mouvement rotatif d'un élément (4, 5) autour de l'axe dudit second ensemble (ER2), sans inhiber la rotation d'aucun des arbres de commandes (9, 10) du premier ensemble (ER1) autour de leur second axe de rotation, et indépendamment du fonctionnement des autres éléments desdits ensembles.

2. Système de transformation de mouvement selon la revendication 1, caractérisé en ce que l'organe de liaison mécanique équipant chaque élément du premier ensemble rotatif consiste en une excroissance (12, 13) dont le plan médian contient le premier axe de rotation dudit élément et contient ou est parallèle à l'axe de rotation du second ensemble rotatif.

3. Système de transformation de mouvement selon la revendication 2, caractérisé en ce que ladite excroissance est un doigt en forme de L (12, 13).

4. Système de transformation de mouvement selon la revendication 3, caractérisé en ce que le L formant l'excroissance (12, 13) comporte un jambage d'allure perpendiculaire au premier axe de rotation de l'élément auquel il est fixé, et une base parallèle audit axe.

5. Système de transformation de mouvement selon l'une des revendications 1 à 4, caractérisé en ce que l'organe de liaison mécanique (14, 15) équipant chaque élément du second ensemble rotatif est doté de deux excroissances parallèles à l'axe de rotation dudit ensemble, entre lesquelles se positionne au moins une partie de l'organe de liaison mécanique (12, 13) d'un des éléments du premier rotatif de sorte qu'elle puisse exercer une action latérale contre l'une ou l'autre desdites excroissances parallèles.

6. Système de transformation de mouvement selon la revendication 5, caractérisé en ce que ledit organe de liaison mécanique (14, 15) équipant chaque élément du second ensemble consiste en une fourche à deux branches en forme de U ouvert vers les éléments du premier ensemble rotatif, dont l'ouverture entre les branches est supérieure à l'épaisseur du doigt (12, 13) en forme de L, au moins dans sa portion formant base.

7. Système de transformation de mouvement selon l'une quelconque des revendications précédentes, caractérisé en ce que les ensembles rotatifs sont au nombre de deux.

8. Système de transformation de mouvement selon la revendication précédente, caractérisé en ce que le premier ensemble rotatif (ER1) consiste en un levier (1) de commande à au moins deux bagues rotatives (2, 3) solidarisées à des arbres de commandes (9, 10) correspondants concentriques, ledit levier (1) étant au surplus libre en rotation, selon un débattement angulaire limité, autour d'au moins un axe de pivotement.

9. Système de transformation de mouvement selon l'une des revendications 7 et 8, caractérisé en ce que le second ensemble rotatif (ER2) consiste en au moins deux chariots (4, 5) superposés pivotant autour d'un axe commun (11) et actionnés par les arbres de commande (9, 10) des bagues (2, 3) du levier (1).

10. Système de transformation de mouvement selon la revendication précédente, caractérisé en ce que chaque chariot (4, 5) est doté de contacts destinés à commuter sur des contacts placés dans un boîtier (6) auquel sont reliés les deux ensembles rotatifs (ER1, ER2), respectivement le levier de commande (1) et les plateaux de commutation (4, 5).

11. Système de transformation de mouvement selon la revendication précédente, caractérisé en ce que les contacts localisés sur les deux chariots superposés (4, 5) sont situés dans un plan unique et coopèrent par glissement avec des pistes de commutation surmoulées dans une embase plane dudit boîtier (6).

## Patentansprüche

1. System zur Bewegungsumwandlung, in Anwendung auf wenigstens zwei Drehaggregate (ER1,ER2) mit nicht zusammenfallenden Hauptdrehachsen, wobei das System die Übertragung der Winkelverstellung wenigstens einer Steuerwelle (9,10) eines ersten Drehaggregats (ER1) auf wenigstens ein Element (4, 5) wenigstens eines zweiten Drehaggregats gestattet, und wobei das genannte erste Drehaggregat (ER1) zusätzlich einen Freiheitsgrad zur Drehung um eine zweite Achse besitzt,
**dadurch gekennzeichnet** daß jeweils jede Steuerwelle (9, 10) des genannten ersten Drehaggregats (ER1) mit einem mechanischen Verbindungsorgan (12, 13) versehen ist, das zum Zusammenwirken mit einem mechanischen Verbindungsorgan (14, 15) eines Elements (4, 5) eines zweiten Drehaggregats (ER2) bestimmt ist, wobei die genannten Organe (12,13,14,15) zur gleichzeitigen Übertragung und Umwandlung der Drehbewegung der genannten Steuerwelle (9,10) des ersten Drehaggregats (ER1) in eine Drehbewegung eines Elements (4,5) um die Achse des genannten zweiten Aggregats (ER2) ausgebildet sind, ohne Behinderung der Drehung jeder der Steuerwellen (9,10) des ersten Aggregats (ER1) um deren zweite Drehachse, und unabhängig von der Funktion der anderen Elemente der genannten Aggregate.

2. System zur Bewegungsumwandlung nach Anspruch 1, dadurch gekennzeichnet, daß das jeweils an jedem Element des ersten Aggregats angeordnete mechanische Verbindungsorgan aus einem Vorsprung (12,13) besteht, dessen Medianebene die erste Drehachse des genannten Elements enthält und die Drehachse des zweiten Drehaggregats enthält oder zu dieser parallwl ist.

3. System zur Bewegungsumwandlung nach Anspruch 2, dadurch gekennzeichnet, daß der genannte Vorsprung ein L-förmiger Finger (12,13) ist.

4. System zur Bewegungsumwandlung nach Anspruch 3, dadurch gekennzeichnet, daß der L-förmige Vorsprung (12,13) einen Schenkel von zur ersten Drehachse des Elements, an dem er befestigt ist, rechtwinkligem Verlauf sowie einen zu der genannten Drehachse parallelen Basisschenkel besitzt.

5. System zur Bewegungsumwandlung nach einem der Ansprüche 1 bis 4, dadurch gekennzeichnet, daß das jeweils an jedem Element des zweiten Drehaggregats angebrachte mechanische Verbindungsorgan (14,15) mit zwei zu der Drehachse des genannten Aggregats parallelen Vorsprüngen versehen ist, zwischen welchen wenigstens ein Teil des mechanischen Verbindungsorgans (12,13) eines der Elemente des ersten Drehaggregats zu liegen kommt, derart daß es gegen den einen oder den anderen der genannten parallelen Vorsprünge eine seitliche oder Querwirkung ausüben kann.

6. System zur Bewegungsumwandlung nach Anspruch 5, dadurch gekennzeichnet, daß das jeweils an jedem Element des zweiten Aggregats angebrachte mechanische Verbindungsorgan (14,15) aus einer zweischenkeligen Gabel in Form eines in Richtung zu den Elementen des ersten Drehaggregats geöffneten U besteht, wobei diese Öffnung zwischen den Schenkeln größer als die Dicke des L-förmigen Fingers (12,13) wenigstens in dessen den Basisschenkel bildendem Bereich ist.

7. System zur Bewegungsumwandlung nach einem der vorhergehenden Ansprüche, dadurch gekennzeichnet, daß die Drehaggregate zwei an der Zahl sind.

8. System zur Bewegungsumwandlung nach dem vorhergehenden Anspruch, dadurch gekennzeichnet, daß das erste Drehaggregat (ER1) aus einem Bedienungshebel (1) mit wenigstens zwei Drehringen bzw. -hülsen (2,3) besteht, die mit entsprechenden konzentrischen Steuerwellen (9,10) verbunden sind, wobei der Bedienungshebel (1) zusätzlich einen Drehfreiheitsgrad entsprechend einem begrenzten Schwenkwinkel um wenigstens eine Schwenkachse besitzt.

9. System zur Bewegungsumwandlung nach einem der An- Ansprüche 7 und 8, dadurch gekennzeichnet, daß das zweite Drehaggregat (ER2) aus wenigstens zwei übereinander angeordneten Gestellen (4,5) besteht, die um eine gemeinsame Achse (11) schwenkbar und durch die Steuerwellen (9,10) der Drehringe bzw. -hülsen (2,3) des Bedienungshebels (1) betätigbar sind.

10. System zur Bewegungsumwandlung nach dem vorhergehenden Anspruch, dadurch gekennzeichnet, daß jeweils jedes Gestell (4,5) mit Kontakten zur Umschaltung an in einem Gehäuse (6) angeordneten Kontakten versehen ist, mit welchem die beiden Drehaggregate (ER1,ER2) bzw. der Bedienungshebel (1) und die Schalterplatten (4,5) verbunden sind.

11. System zur Bewegungsumwandlung nach dem vorhergehenden Anspruch, dadurch gekennzeichnet, daß die auf den beiden übereinander angeordneten Gestellen (4,5) angebrachten Kontakte in einer einzigen Ebene liegen und mittels Gleitverschiebung mit Umschaltleiterbahnen zusammenwirken, die in einer ebenen Grundplatte des genannten Gehäuses (6) geformt sind.

## Claims

1. System for converting motion applied to at least two rotary assemblies (ER1, ER2) with non-concurrent main axes, allowing an angular displacement of at least one operating shaft (9, 10) of a first rotary assembly (ER1) to be transmitted to at least one element (4, 5) of at least a second rotary assembly (ER2), the said first rotary assembly (ER1) additionally being free to rotate about a second axis, characterized in that each operating shaft (9, 10) of the said first rotary assembly (ER1) is equipped with a mechanical connection member (12, 13) intended to collaborate with a mechanical connection member (14, 15) of an element (4, 5) of a second rotary assembly (ER2), the said members (12, 13, 14, 15) being configured so as to simultaneously transmit and convert the rotary motion of the said operating shaft (9, 10) of the first assembly (ER1) into a rotary motion of an element (4, 5) about the axis of the said second assembly (ER2) without preventing the rotation of either one of the operating shafts (9, 10) of the first assembly (ER1) about their second axis of rotation and, independently of the operation of the other elements of the said assemblies.

2. Motion conversion system according to Claim 1, characterized in that the mechanical connection member equipping each element of the first rotary assembly consists of a projection (12, 13), the mid-plane of which contains the first axis of rotation of the said element and contains or is parallel to the axis of rotation of the second rotary assembly.

3. Motion conversion system according to Claim 2, characterized in that the said projection is an L-shaped finger (12, 13).

4. Motion conversion system according to Claim 3, characterized in that the L forming the projection (12, 13) comprises a post in aspect perpendicular to the first axis of rotation of the element to which it is attached and a base parallel to the said axis.

5. Motion conversion system according to one of Claims 1 to 4, characterized in that the mechanical connection member (14, 15) equipping each element of the second rotary assembly is provided with two projections parallel to the axis of rotation of the said assembly, between which at least part of the mechanical connection member (12, 13) of one of the elements of the first rotary [lacuna] is positioned so that it can exert lateral action on one or other of the said parallel projections.

6. Motion conversion system according to Claim 5, characterized in that the said mechanical connection member (14, 15) equipping each element of the second assembly consists in a fork with two branches in the shape of a U open towards the elements of the first rotary assembly, of which the opening between the branches is greater than the thickness of the L-shaped finger (12, 13) at least in its base-forming portion.

7. Motion conversion system according to any one of the preceding claims, characterized in that there are two rotary assemblies.

8. Motion conversion system according to the preceding claim, characterized in that the first rotary assembly (ER1) consists of an operating lever (1) with at least two rotary rings (2, 3) secured to concentric corresponding operating shafts (9, 10), the said lever (1) additionally being free to rotate, with a limited angular excursion, about at least one axis of pivoting.

9. Motion conversion system according to one of Claims 7 and 8, characterized in that the second rotary assembly (ER2) consists in at least two superposed carriages (4, 5) pivoting about a common axis (11) and actuated by the operating shafts (9, 10) of the rings (2, 3) of the lever (1).

10. Motion conversion system according to the preceding claim, characterized in that each carriage. (4, 5) is provided with contacts intended to switch on contacts placed in a housing (6) to which the two rotary assemblies (ER1, ER2), respectively the operating lever (1) and the switching plates (4, 5) are connected.

11. Motion conversion system according to the preceding claim, characterized in that the contacts located on the two superposed carriages (4, 5) are located in a single plane and collaborate by sliding with switching tracks overmoulded into a flat bed plate of the said housing (6).
